# FASCICULE DE BREVET EUROPEEN

(11) **EP 3 289 380 B1**
(45) Date de publication et mention de la délivrance du brevet: **20.12.2023**
(21) Numéro de dépôt: 16721131.7
(22) Date de dépôt: 29.04.2016
(51) Int. Cl.: G01S 13/88

(54) **SYSTÈME ET PROCÉDÉ D'ESTIMATION DU RENDEMENT D'UNE PARCELLE CULTIVÉE**
SYSTEM UND VERFAHREN ZUR SCHÄTZUNG DES ERTRAGS EINER KULTIVIERTEN PARZELLE
SYSTEM AND METHOD FOR ESTIMATING THE YIELD OF A CULTIVATED PLOT

(30) Priorité: 30.04.2015 FR 1553929
(43) Date de publication de la demande: 07.03.2018
(73) Titulaire: Ovalie Innovation, 32000 Auch (FR)
(72) Inventeur: VERONESE, Thierry, 31370 Lautignac (FR); HENRY, Dominique, 31400 Toulouse (FR); AUBERT, Herve, 31000 Toulouse (FR)
(74) Mandataire: Regimbeau
(86) Numéro de dépôt international: PCT/EP2016/059697
(87) Numéro de publication internationale: WO 2016/174248

(56) Documents cités:
- US-A1- 2011 222 738
- US-A1- 2015 015 697
- Jesus Soria-Ruiz: "Corn monitoring and crop yield unsing optical and microwave remote sensing", , 1 octobre 2009 (2009-10-01), XP055253412, Extrait de l'Internet: URL:http://cdn.intechopen.com/pdfs-wm/9521 .pdf [extrait le 2016-02-26]
- MIKE SCHWANK ET AL: "L-Band Radiative Properties of Vine Vegetation at the MELBEX III SMOS Cal/Val Site", IEEE TRANSACTIONS ON GEOSCIENCE AND REMOTE SENSING, IEEE SERVICE CENTER, PISCATAWAY, NJ, US, vol. 50, no. 5, 1 mai 2012 (2012-05-01), pages 1587-1601, XP011441533, ISSN: 0196-2892, DOI: 10.1109/TGRS.2012.2184126
- DAVID BALLESTER-BERMAN J ET AL: "Incoherent electromagnetic model for vineyards at C-band", GEOSCIENCE AND REMOTE SENSING SYMPOSIUM (IGARSS), 2012 IEEE INTERNATIONAL, IEEE, 22 juillet 2012 (2012-07-22), pages 5689-5692, XP032469788, DOI: 10.1109/IGARSS.2012.6352320 ISBN: 978-1-4673-1160-1
- MINGQUAN JIA ET AL: "Multifrequency and multitemporal ground-based scatterometers measurements on rice fields", GEOSCIENCE AND REMOTE SENSING SYMPOSIUM (IGARSS), 2012 IEEE INTERNATIONAL, IEEE, 22 juillet 2012 (2012-07-22), pages 642-645, XP032469257, DOI: 10.1109/IGARSS.2012.6351512 ISBN: 978-1-4673-1160-1
- Tina Caputo: "Wines & Vines - Improving Grape Crop Estimation Methods", , 1 juin 2006 (2006-06-01), XP055253385, Extrait de l'Internet: URL:http://www.winesandvines.com/sections/ printout_article.cfm?article=feature&conte nt=49783 [extrait le 2016-02-26]

## Description

### DOMAINE TECHNIQUE GENERAL

L'invention concerne le domaine de l'imagerie radar appliquée à l'agriculture et notamment au domaine des fruits et légumes en vue de connaître leurs rendements avant les récoltes.

### ETAT DE LA TECHNIQUE

Dans le domaine de l'agriculture, les exploitants agricoles ont besoin d'estimer le rendement agricole d'une parcelle cultivée afin d'évaluer quelle sera la récolte. On précise qu'un rendement agricole est une quantité de produit récolté ramenée à une unité de surface d'une parcelle cultivée donnée (Ex : Tonnes / hectar, Quintaux / ha).

En particulier, dans le domaine des cultures de fruit ou de légume il est intéressant pour un exploitant de pouvoir recueillir rapidement et précisément des données comme la quantité de fruits ou légumes, le poids de chacun à différents stades du développement (formation, plateau et maturité) afin d'établir des cartographies de rendement parcelle par parcelle et/ou à l'intérieur d'une même parcelle agricole et ainsi, de prévoir jusqu'à un ou deux mois à l'avance ce que rapporteront les récoltes.

A cet effet, on connait une solution selon laquelle un piéton parcourt une parcelle d'un champ cultivé et mesure au moyen d'un capteur dédié le poids de plusieurs fruits / légumes ainsi que leur nombre afin de déterminer le rendement de la parcelle cultivée.

Une telle solution est contraignante et peu fiable. En outre, cette solution peut abimer/détruire les fruits/légumes ou obliger d'effeuiller les plantes afin de permettre à l'opérateur et au capteur d'accéder visuellement aux fruits.

La publication de MINGQUAN JIA ET AL: "Multifrequency and multitemporal ground-based scatterometers measurements on rice fields", GEOSCIENCE AND REMOTE SENSING SYMPOSIUM (IGARSS), 2012 IEEE INTERNATIONAL, IEEE, 22 juillet 2012 (2012-07-22), pages 642-645, XP032469257, divulgue un système d'estimation du rendement agricole d'une parcelle cultivée comprenant une pluralité de cultures le système à partir de l'acquisition par un radar d'images de la parcelle cultivée.

### PRESENTATION DE L'INVENTION

Un des buts de l'invention est de proposer une solution qui permet d'estimer un rendement d'une parcelle agricole.

A cet effet, l'invention propose un procédé d'estimation du rendement agricole d'une parcelle cultivée comprenant une pluralité de cultures selon la revendication 1.

Selon un dernier aspect, l'invention concerne l'utilisation d'un procédé selon l'invention, pour estimer le rendement agricole d'une parcelle de fruits ou de légumes.

L'invention permet de recueillir rapidement et précisément des données afin de d'anticiper ce que donneront les récoltes en termes de volume global (rendement) et de qualité associée.

En outre, l'invention n'abime pas les fruits/légumes et les arbres, plants ou pieds car elle s'effectue sans contact (à distance) et sans effeuillage.

Ainsi, l'invention permet de pouvoir fournir à l'ensemble des acteurs de la filière agricole impliqués dans l'estimation d'un rendement, un système et un procédé fiables et rapides permettant des pronostics précoces.

Appliquée à la viticulture, l'invention permet notamment de recueillir rapidement et précisément des données comme la quantité de raisins sur des ceps de vigne, le poids des grappes à différents stades du développement (formation, plateau et maturité) et ainsi de prévoir jusqu'à un ou deux mois à l'avance ce que rapporteront les vendanges sur des parcelles de plusieurs milliers de pied et les stratégies de récolte et de logistique de transport/stockage qui seront développées.

En effet, dans le domaine de la viticulture, avoir un système et un procédé capables de recueillir rapidement et précisément des données comme la quantité de raisins sur des ceps de vigne est un atout majeur pour l'entreprise concernée. Un tel système, pour un spécialiste viticole, permet en effet de connaître le poids des grappes à différents stades du développement (formation, plateau et maturité) et ainsi de prévoir jusqu'à un ou deux mois à l'avance ce que rapporteront les vendanges sur des parcelles de plusieurs milliers de pieds.

Une même logique peut s'appliquer à tout type de culture fruitière ou légumière.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre un système d'estimation du rendement agricole d'une parcelle cultivée ;
- La figure 2 illustre des étapes d'un procédé d'estimation du rendement agricole d'une parcelle cultivée ;
- La figure 3 illustre une parcelle cultivée ;
- La figure 4 illustre une image acquise au cours d'un procédé d'estimation du rendement agricole d'une parcelle cultivée ;
- La figure 5 illustre un pied de vigne d'une parcelle cultivée.

Sur l'ensemble des figures, les éléments similaires portent des références identiques.

### DESCRIPTION DETAILLEE DE L'INVENTION

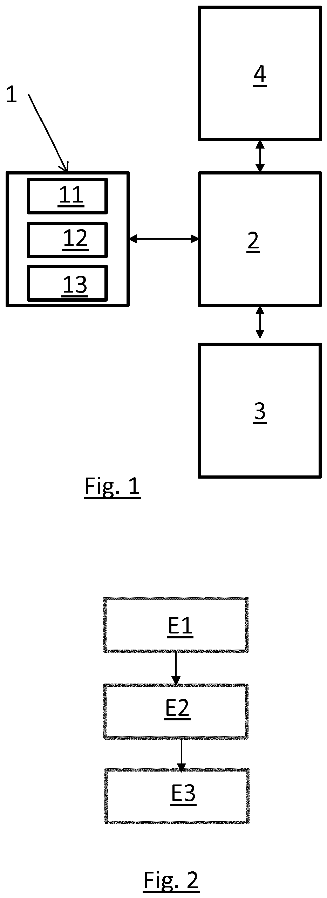

On a illustré sur la **figure 1** un système d'estimation du rendement agricole d'une parcelle cultivée comprenant une unité radar 1 configurée pour acquérir au moins une image tridimensionnelle (3D) ou bidimensionnelle (2D) de la parcelle cultivée. L'unité radar comprend donc un radar 11 configuré pour fonctionner dans le domaine des ondes millimétriques ou microondes et à large bande de fréquence. De préférence, le radar fonctionne dans le domaine des ondes continues modulées en fréquence (en anglais, *« Frequency-Modulated Continous Wave »,* (FMCW)).

Par ailleurs l'unité radar 1 comprend une unité 12 de focalisation (non représenté) qui permet de focaliser le faisceau émis par le radar dans une direction d'acquisition. Une telle focalisation favorise le comptage pour obtenir le rendement de la parcelle (voir ci-après). Une telle unité 12 de focalisation est constituée par une antenne à réflecteur (parabolique par exemple), lentille électromagnétique ou un réseau d'antennes.

L'unité radar 1 est de préférence configurée pour être disposée au niveau du sol de la parcelle de manière à pouvoir imager les cultures de la parcelle. On comprend ici que l'unité radar 1 est à la hauteur des cultures (et pas au-dessus comme des techniques d'imageries radar par satellite connues).

De manière complémentaire, le système comprend en outre une unité (13) de déplacement du radar configurée pour déplacer le radar dans la parcelle cultivée d'une position à une autre de manière obtenir des images d'au moins une culture pour chaque position du radar, le radar balayant la parcelle cultivée à partir de chaque position et effectuant alors au moins une acquisition depuis chaque position.

L'unité 13 de déplacement est mécanique ou électronique (voir ci-après).

Le système comprend en outre Le système comprend en outre une unité 2 de traitement configurée pour mettre en oeuvre des étapes d'un procédé d'estimation du rendement agricole d'une parcelle cultivée qui sera décrit ci-après.

Ce système comprend en outre une mémoire 3, qui permet de stocker des images acquises par le radar 1 et un logiciel qui contrôle l'unité 2 de traitement pour qu'elle mette en oeuvre le procédé d'estimation du rendement agricole d'une parcelle cultivée. Le système comprend en outre éventuellement un outil 4 d'interaction avec un utilisateur permettant à un opérateur de visualiser des images acquises, de rentrer des données ou de paramétrer le logiciel. Il s'agit par exemple d'un clavier associé à un écran.

En particulier, l'unité radar 1 fonctionne dans une bande de fréquences centrée sur 24 GHz ou 77GHz voire des fréquences plus élevées (120 GHz par exemple). L'unité radar est à balayage électronique ou mécanique et se déplace (mouvement de translation par exemple) afin d'accroitre la résolution spatiale de la mesure. Cette technique d'imagerie radar est connue sous le nom de méthode SAR (Synthetic Aperture Radar). Bien que très largement utilisée par les imageurs satellitaires elle n'a jamais été appliquée à l'estimation du rendement agricole d'une parcelle cultivée.

L'utilisation de l'unité radar 1 présente l'avantage d'être sans contact avec les cultures présentes sur la parcelle cultivée de sorte qu'elles ne sont pas endommagées au cours des différentes mesures.

En relation avec la **figure 2****,** un procédé d'estimation du rendement agricole d'une parcelle cultivée comprend les étapes décrites ci-après.

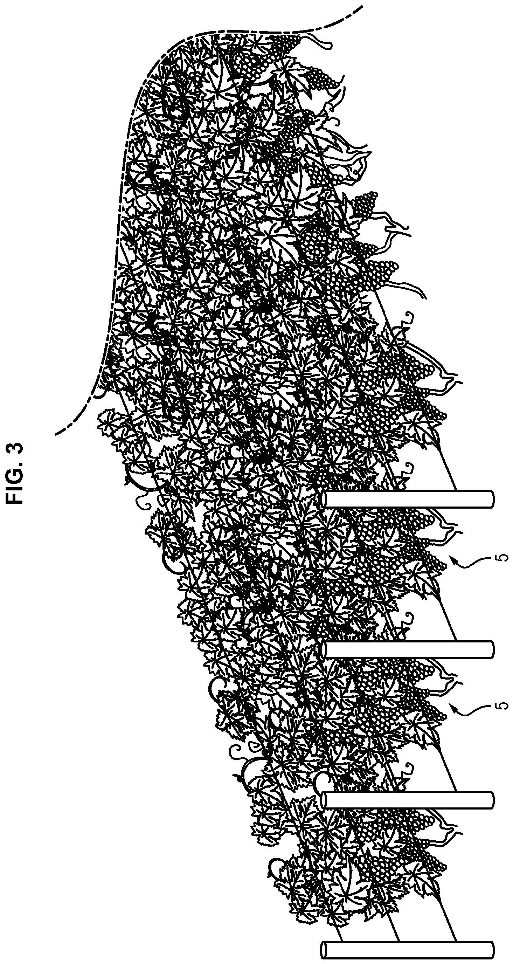

On a illustré sur la **figure 3** une parcelle cultivée qui a titre d'exemple non limitatif comprend des pieds de vignes plantés selon plusieurs rangées.

Le procédé comprend une première étape E1 d'acquisition d'au moins une image tridimensionnelle de la parcelle cultivée au moyen de l'unité 1 radar. L'unité radar est posée au sol à proximité de la parcelle cultivée. Elle est notamment posée à un endroit lui permettant d'acquérir au mieux la parcelle cultivée.

En particulier, l'étape E1 d'acquisition consiste à balayer la parcelle cultivée pour laquelle on souhaite estimer le rendement.

Une image acquise par l'unité radar est typiquement bidimensionnelle (2D) ou tridimensionnelle (3D).

En outre, l'image acquise comprend plusieurs zones de contrastes. Cette image est une représentation spatiale du niveau de l'écho radar (ou de rétrodiffusion électromagnétique) en tout point d'un espace éclairé par l'onde émise par l'unité radar.

Lorsqu'un point de cet espace appelé ici *pixel* rétrodiffuse fortement cette onde il apparait comme un point brillant dans l'image tandis qu'un pixel peu réfléchissant est visualisé comme un point sombre dans cette image.

Par exemple, une grappe de raisin (ou un ensemble de grappes de raisin) sera donc vue comme une collection compacte de points brillants occupant un certain volume dans l'image radar. Ce volume est corrélé au volume physique de la grappe (ou de l'ensemble des grappes) de sorte que sa mesure permet en principe de déduire le volume physique de la grappe (ou de l'ensemble des grappes). Le traitement de l'image radar (cf. la méthode SAR) permet de minimiser l'impact du clutter, comme par exemple le feuillage, les piquets, des fils de fer, ou les zones boisées (pieds de vigne), sur l'estimation de volume d'intérêt. Cette technique d'estimation sans contact du volume est applicable à tout autre fruit ou légume en fonction de la parcelle cultivée considérée.

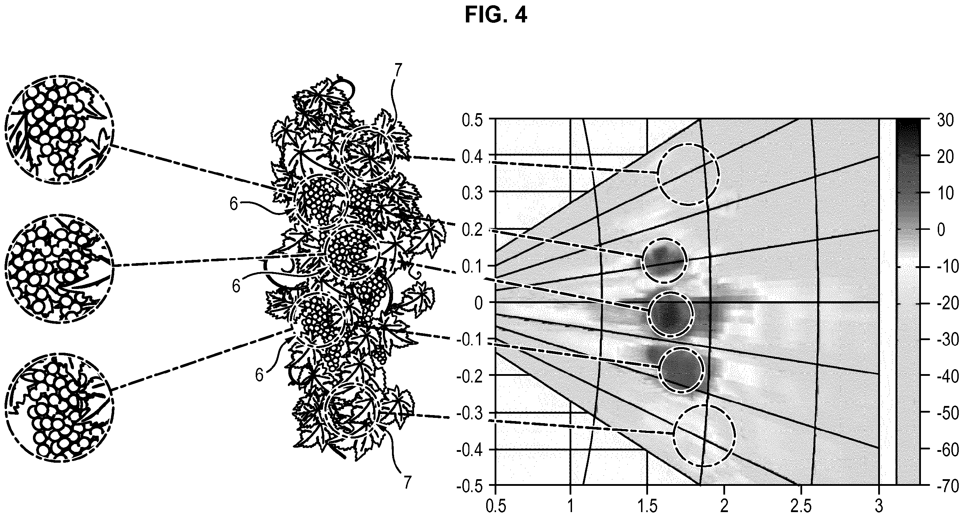

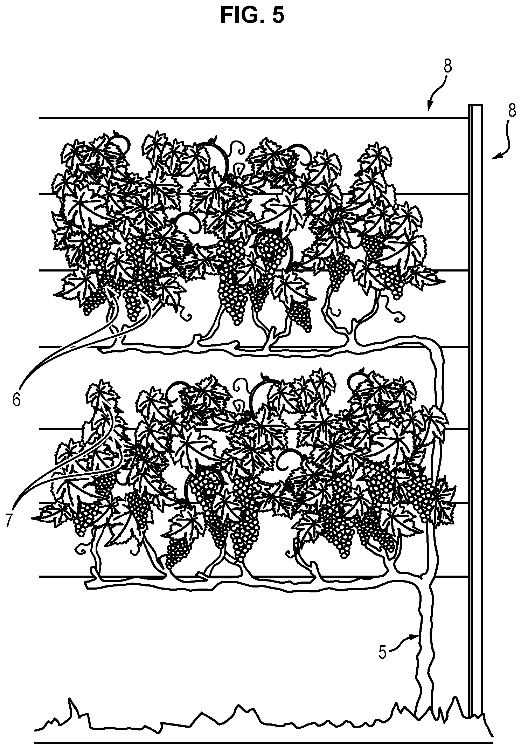

La **figure 4** illustre une image 2D acquise au cours du procédé et la **figure 5** illustre un pied de vigne comprenant des feuillages 7 et des grappes 3 ainsi que toutes les infrastructures 8 nécessaires à la bonne croissance.

Sur la figure 4, l'image radar à droite est celle d'un feuillage comportant trois grappes 6 de raisins. La signature ou écho radar du feuillage 7 est mesurable mais d'une intensité plus faible que celle des trois grappes 6.

Cette image acquise est dans une deuxième étape E2 traitée pour en extraire des données représentatives du rendement de la parcelle cultivée. Cette étape consiste à appliquer la méthode SAR (en anglais, « *Synthetic Aperture Radar»*) qui tire parti du balayage (mécanique ou électronique) de l'antenne du radar pour accroitre le contraste entre signature radar de la cible d'intérêt (par exemple la grappe de raisin) et celle de son environnement. Ce balayage peut être conjugué à un mouvement de translation de l'antenne afin d'accroitre davantage la résolution de la mesure à distance de volume.

Des données représentatives du rendement sont notamment : un nombre de cultures présentes sur la parcelle cultivée et/ou la taille de chaque parcelle et/ou, le poids de chaque culture.

En viticulture, la définition générale du rendement est le poids de la vendange par unité de surface, l'hectare. A l'échelle de la souche de vigne, les composantes du poids de récolte sont le nombre de grappes, le nombre moyen de baies par grappe et le poids moyen des baies. A l'échelle de l'hectare, s'ajoute à ces composantes le nombre de souches.

De manière avantageuse, l'acquisition consiste à déplacer le radar dans la parcelle cultivée d'une position à une autre position de manière obtenir des images de culture(s) pour chaque position du radar, le radar balayant la parcelle cultivée à partir de chaque position.

Ainsi, le radar est mobile dans la parcelle cultivée selon deux configurations possibles :
- selon une première configuration : le radar est immobile et placé devant un ensemble de cultures (par exemple des ceps de vigne), ce dernier effectue alors un balayage mécanique ou électronique pour réaliser une image radar de la scène à partir de laquelle le rendement sera estimé (en particulier, le volume des grappes des ceps de vigne). Une fois l'image acquise, le radar sera alors déplacé de quelques mètres (par exemple, le long d'un sillon) et procédera à l'acquisition d'une nouvelle image et ainsi de suite. Cette configuration est dite de proche en proche ;
- selon une seconde configuration : le radar sera mobile et placé sur un véhicule en mouvement (par exemple, le long d'un sillon) : le radar balayera la scène tout en subissant les secousses liées au déplacement du véhicule portant le radar. Cette configuration est dite dynamique.

Afin de permettre le déplacement du radar, on pourra prévoir de placer le radar sur un véhicule ou robot mobile (télécommandé à distance ou bien motorisé avec chauffeur du type quad, en tout état de cause, le véhicule devra être adapté à se déplacer dans la parcelle cultivée). Le radar est muni d'un dispositif permettant de connaître précisément son déplacement afin d'en tenir compte lors du traitement de l'image.

Le procédé comprend une troisième étape E3 de détermination du rendement du rendement de la parcelle cultivée. Il s'agit ici de compter les cultures sur chaque image acquise et le rendement est notamment obtenu par le produit suivant : volume d'une culture x nombre de culture (fruit ou légume) par unité de surface (m², Ha) X taille de la parcelle cultivée X masse volumique de la culture (fruit ou légume).

Et en particulier, s'agissant de raisins, le rendement est obtenu par le produit suivant : nombre de grappe x poids de la grappe x parcelle cultivée.

Le poids de la grappe est notamment une extrapolation des données extraites fonction de l'âge de la parcelle cultivée. Le poids de la grappe ou du fruit résulte de la mesure, soit de la correspondance entre le volume estimé par le radar et la masse volumique connue des produits mesurés. Le poids peut être obtenu à partir d'une banque de données conséquentes ou calculées à partir d'un facteur de grossissement des cultures basés, là aussi, sur des résultats moyens historiques (minimum de 10 ans).

Ainsi, le comptage des cultures consiste à balayer la scène (mécaniquement ou électroniquement) par le faisceau très étroit focalisé issu du radar. Dans la direction du faisceau la densité de puissance électromagnétique est très élevée tandis que dans les autres directions de l'espace, elle est bien plus faible (une antenne ayant une forte capacité à focaliser ainsi la densité de puissante électromagnétique dans une direction donnée est dite directive).

L'onde focalisée dans une direction de l'espace est rétrodiffusée essentiellement par les cibles (fruits, feuilles, troncs, branches ...) qu'elle intercepte dans cette direction.

En effet les cibles qui se trouvent dans les autres directions contribuent peu à l'écho puisque ces cibles sont en principe faiblement éclairées par l'onde émise par le radar.

Lorsque l'écho est fort en un point placé dans cette direction cela signifie que l'onde a intercepté la surface d'un objet : pour estimer la taille de l'objet ainsi détecté il suffit alors de dépointer légèrement le faisceau de l'antenne d'émission du radar jusqu'à ce que cet écho s'éteigne.

Le faisceau d'émission balaie ainsi toute la scène pour permettre l'acquisition automatique d'une image radar constituée par l'ensemble des échos de tous les points de la scène. La taille et le nombre d'objets rétrodiffusant dans la scène peuvent en principe être déduits de cette image radar.

## Revendications

1. Procédé d'estimation du rendement agricole d'une parcelle cultivée comprenant une pluralité de cultures, le procédé comprenant les étapes suivantes :
- positionnement d'un radar (1) au niveau du sol de la parcelle sur une unité (13) de déplacement du radar (1) de manière à pouvoir imager les cultures de la parcelle lors du déplacement de l'unité de déplacement du radar (1) ; ladite unité radar (1) comprenant : un radar (11) configuré pour acquérir au moins une image de la parcelle cultivée, ledit radar fonctionnant dans le domaine des ondes continues modulées en fréquence ; une unité (12) de focalisation configurée pour focaliser un faisceau issu du radar dans une direction d'acquisition ; et l'unité (13) de déplacement du radar configurée pour déplacer ledit radar au sein de parcelle cultivée d'une position à une autre, le radar étant muni d'un dispositif permettant de connaître son déplacement,
- le procédé comprenant les étapes suivantes mises en oeuvre dans une unité (2) de traitement:
- balayage (E1) au moyen du radar, de la parcelle cultivée par acquisition d'images d'au moins une culture au cours du déplacement de l'unité de déplacement du radar (1), l'image acquise comprenant plusieurs zones de contrastes, le radar (1) connaissant précisément son déplacement lors de l'acquisition des images ;
- traitement (E2) de l'image acquise pour identifier des zones de l'image qui correspondent à une culture afin d'en extraire au moins une donnée représentative du rendement de la parcelle cultivée, ledit traitement consistant à appliquer une méthode SAR qui tire parti du balayage de l'antenne du radar de manière à accroitre le contraste entre signature radar des cultures et leur environnement, ledit traitement tenant compte du déplacement du radar ;
- détermination (E3) du rendement de la parcelle cultivée à partir des données extraites.

2. Procédé selon la revendication 1, dans lequel des données représentatives du rendement comprennent : nombre de cultures présents sur la parcelle cultivée et/ou la taille de chaque parcelle et/ou le poids de chaque culture.

3. Procédé selon la revendication 2, dans lequel la détermination du rendement consiste à compter les cultures sur chaque image acquise, ledit rendement étant notamment obtenu par le produit suivant : volume d'une culture x nombre de culture par unité de surface x taille la parcelle x masse volumique de la culture.

4. Procédé selon l'une des revendications précédentes, les images sont acquises au moyen de l'unité radar (1) dans une bande de fréquences comprise entre 24 GHz et 80 GHz.

5. Procédé selon l'une des revendications précédentes, dans lequel le dispositif de focalisation étant constitué par une antenne à réflecteur ou une lentille électromagnétique ou un réseau d'antennes, le procédé comprenant, au cours de l'acquisition une translation de l'antenne ou du réseau d'antenne(s).

6. Procédé selon l'une des revendications 3 à 5, dans lequel le poids de la grappe est une extrapolation des données extraites fonction de l'âge de la parcelle cultivée, ledit poids résultant de la mesure, soit de la correspondance entre le volume estimé par le radar et la masse volumique connue des produits mesurés.

7. Procédé d'estimation selon l'une des revendications 1 à 6, dans lequel l'acquisition consiste à déplacer le radar dans la parcelle cultivée d'une position à une autre de manière obtenir des images de culture(s) pour chaque position du radar, le radar balayant la parcelle cultivée à partir de chaque position.

8. Utilisation d'un procédé selon l'une des revendications 4 à 7, pour estimer le rendement agricole d'une parcelle de fruits ou de légumes.

## Patentansprüche

1. Verfahren zur Schätzung des landwirtschaftlichen Ertrags einer kultivierten Parzelle, die eine Vielzahl von Kulturen umfasst, wobei das Verfahren die folgenden Schritte umfasst:
- Positionieren eines Radars (1) im Bereich des Bodens der Parzelle auf einer Verlagerungseinheit (13) des Radars (1), so dass die Kulturen der Parzelle bei der Verlagerung der Verlagerungseinheit des Radars (1) darstellbar sind; wobei die Radareinheit (1) umfasst: einen Radar (11), der dazu ausgelegt ist, mindestens ein Bild der kultivierten Parzelle zu erfassen, wobei der Radar im Bereich der frequenzmodulierten kontinuierlichen Wellen arbeitet; eine Fokussiereinheit (12), die dazu ausgelegt ist, einen von dem Radar ausgehenden Strahl in eine Erfassungsrichtung zu fokussieren; und die Verlagerungseinheit (13) des Radars, die dazu ausgelegt ist, den Radar innerhalb der kultivierten Parzelle von einer Position zu einer anderen zu verlagern, wobei der Radar mit einer Vorrichtung ausgestattet ist, die erlaubt, seine Verlagerung zu kennen,
- wobei das Verfahren die folgenden Schritte umfasst, die in einer Verarbeitungseinheit (2) durchgeführt werden:
- Abtasten (E1), mittels des Radars, der kultivierten Parzelle durch Erfassung von Bildern von mindestens einer Kultur während der Verlagerung der Verlagerungseinheit des Radars (1), wobei das erfasste Bild mehrere Kontrastzonen umfasst, wobei der Radar (1) seine Verlagerung bei der Erfassung der Bilder genau kennt;
- Verarbeiten (E2) des erfassten Bildes, um Zonen des Bildes zu identifizieren, die einer Kultur entsprechen, um daraus mindestens eine für den Ertrag der kultivierten Parzelle repräsentative Angabe zu extrahieren, wobei die Verarbeitung darin besteht, eine SAR-Methode anzuwenden, die die Abtastung der Antenne des Radars zur Vergrößerung des Kontrasts zwischen der Radarsignatur der Kulturen und ihrer Umgebung nutzt, wobei die Verarbeitung die Verlagerung des Radars berücksichtigt;
- Bestimmen (E3) des Ertrags der kultivierten Parzelle ausgehend von den extrahierten Daten.

2. Verfahren nach Anspruch 1, wobei die repräsentativen Daten des Ertrags umfassen: Anzahl der auf der kultivierten Parzelle vorhandenen Kulturen und/oder die Größe jeder Parzelle und/oder das Gewicht jeder Kultur.

3. Verfahren nach Anspruch 2, wobei die Bestimmung des Ertrags darin besteht, die Kulturen auf jedem erfassten Bild zu zählen, wobei der Ertrag insbesondere durch das folgende Produkt erhalten wird: Volumen einer Kultur x Anzahl der Kultur je Flächeneinheit x Größe der Parzelle x Volumenmasse der Kultur.

4. Verfahren nach einem der vorangehenden Ansprüche, wobei die Bilder mittels der Radareinheit (1) in einem Frequenzband erfasst werden, das zwischen 24 GHz und 80 GHz liegt.

5. Verfahren nach einem der vorangehenden Ansprüche, wobei die Fokussiervorrichtung von einer Antenne mit Reflektor oder einer elektromagnetischen Linse oder einem Antennennetzwerk gebildet ist, wobei das Verfahren während der Erfassung eine Translation der Antenne oder des Antennennetzwerks umfasst.

6. Verfahren nach einem der Ansprüche 3 bis 5, wobei das Gewicht der Traube eine Extrapolation der extrahierten Daten abhängig vom Alter der kultivierten Parzelle ist, wobei das Gewicht aus der Messung resultiert, das heißt aus der Übereinstimmung zwischen dem von dem Radar geschätzten Volumen und der bekannten Volumenmasse der gemessenen Produkte.

7. Schätzverfahren nach einem der Ansprüche 1 bis 6, wobei die Erfassung darin besteht, den Radar in der kultivierten Parzelle von einer Position zu einer anderen derart zu verlagern, dass man Bilder der Kultur(en) für jede Position des Radars erhält, wobei der Radar die kultivierte Parzelle aus jeder Position abtastet.

8. Verwendung eines Verfahrens nach einem der Ansprüche 4 bis 7 zur Schätzung des landwirtschaftlichen Ertrags einer Parzelle mit Früchten oder Gemüse.

## Claims

1. A method of estimating the crop yield of a cultivated plot comprising a plurality of crops, the method comprising the following steps:
- positioning of a radar (1) at ground level of the plot on a unit (13) for moving the radar (1) so as to be able to image the crops in the plot while the unit for moving the radar (1) moves; said radar unit (1) comprising : a radar (11) configured to acquire at least one image of the cultivated plot, said radar operating in the frequency modulated continuous wave domain; a focusing unit (12) configured to focus a beam from the radar in an acquisition direction; and the radar displacement unit (13) configured to displace said radar within the cultivated plot from one position to another, the radar being provided with a device enabling its displacement to be known,
- the process comprising the following steps carried out in a processing unit (2):
- scanning (E1), by means of the radar, of the cultivated plot by acquiring images of at least one crop during the movement of the unite for moving the radar (1), the image acquired comprising several contrast zones, the radar (1) knowing precisely its movement during the acquisition of the images;
- processing (E2) of the acquired image to identify areas of the image corresponding to a crop in order to extract at least one datum representative of the yield of the cultivated plot, said processing consisting in applying a SAR method taking advantage of the scanning of the radar antenna so as to increase the contrast between the radar signature of the crops and their environment, said processing taking into account of the displacement of the radar;
- determining (E3) of the yield of the cultivated plot from the extracted data.

2. A method according to claim 1, wherein data representative of yield include: number of crops present on the cultivated plot and/or the size of each plot and/or the weight of each crop.

3. Method according to claim 2, wherein the yield is determined by counting the crops on each image acquired, said yield being obtained in particular by the following product: volume of a crop x number of crops per unit area x size of the plot x density of the crop.

4. Method according to one of the preceding claims, the images are acquired by means of the radar unit (1) in a frequency band between 24 GHz and 80 GHz.

5. Method according to one of the preceding claims, wherein the focusing device consists of a reflector antenna or an electromagnetic lens or an antenna array, the method comprising, during acquisition, a translation of the antenna or of the antenna array(s).

6. Method according to one of claims 3 to 5, wherein the weight of the bunch is an extrapolation of the extracted data as a function of the age of the cultivated plot, said weight resulting from the measurement, i.e. from the correspondence between the volume estimated by the radar and the known density of the measured products.

7. Estimation method according to one of claims 1 to 6, wherein the acquisition consists in moving the radar in the cultivated plot from one position to another so as to obtain images of crop(s) for each position of the radar, the radar scanning the cultivated plot from each position.

8. Use of a method according to one of claims 4 to 7, to estimate the crop yield of a plot of fruit or vegetables.
